Europäisches Patentamt

(19) European Patent Office

Office européen des brevets

(11) Publication number: **0 283 110 B1**

# EUROPEAN PATENT SPECIFICATION

(12)

(45) Date of publication of patent specification :
24.07.91 Bulletin 91/30

(51) Int. Cl.⁵ : **H02K 1/16, H02K 17/04**

(21) Application number : **88300380.8**

(22) Date of filing : **18.01.88**

(54) Single-phase two-pole induction motor with laminated iron core.

(30) Priority : **16.01.87 GB 8701037**

(43) Date of publication of application :
**21.09.88 Bulletin 88/38**

(45) Publication of the grant of the patent :
**24.07.91 Bulletin 91/30**

(84) Designated Contracting States :
**AT BE CH DE ES FR GB GR IT LI LU NL SE**

(56) References cited :
CH-A- 209 221
DE-A- 3 704 226
DE-B- 1 563 056
US-A- 3 235 762

(73) Proprietor : **Yang, Tai-Her**
**5-1 Taipin Street**
**Si-Hu Town Dzan-Hwa (TW)**

(72) Inventor : **Yang, Tai-Her**
**5-1 Taipin Street**
**Si-Hu Town Dzan-Hwa (TW)**

(74) Representative : **Arthur, Bryan Edward et al**
**4 Dyers Buildings Holborn**
**London, EC1N 2JT (GB)**

## Description

The iron core of known alternating current two-pole single phase induction motors is usually designed with a uniformly distributed magnetic yoke (as indicated in the attachments 1-2). Such an arrangement does not make the most economical use of the core. Such a known iron core does not define a polar axis ; i.e. the polar axis can have any orientation. Such a construction causes an irregular magnetic flux distribution and wastes iron core material. It is an object of the present invention to provide an improved distribution of the material of the core.

US3,235,762 discloses an alternating current single phase two-pole induction motor in which stator laminations are so shaped that the radial thickness of the yoke at the root of each associated stator winding slot increases away from a polar axis of the stator.

The present invention provides an induction motor as disclosed in US3,235,762 characterised in that $W_n = 1/2\,T_o + T_1 + T_2 + \dots T_n$ for teeth up to 90° from the polar axis, where $w_n$ is the yoke radial thickness at the nth tooth from the polar axis, $T_o$ is the tooth thickness at the polar axis and $T_1$, $T_2$.....$T_n$ are the widths of the first, second......nth teeth from the polar axis at either side of the polar axis. In this way it is possible to reduce the usage of iron core by 20% with maintenance of its normal functions, and thereby to decrease the weight and dimensions of the motor.

Preferred embodiments are claimed in due dependent claims.

The invention will now be described by way of example with reference to the drawings in which :

Figure 1 shows a stator core for use in an induction motor in accordance with the invention ;

Figure 2 shows a further stator core for use in an induction motor in accordance with the invention;

Figure 3 shows a further stator core for use in an induction motor in accordance with the invention;

Figure 4 shows a further stator core for use in an induction motor in accordance with the invention;

Figure 5 shows a further stator core for use in an induction motor in accordance with the invention;

Figure 6 illustrates how a pressed silicon steel plate can be cut to produce stator laminations for the stator of Figure 5 ;

Figure 7 shows a further stator for use in an induction motor in accordance with the invention ;

Figure 8 shows a further stator for use in an induction motor in accordance with the invention ;

Figure 9 shows a further stator for use in an induction motor in accordance with the invention ;

Figure 10 shows a further stator for use in an induction motor in accordance with the invention, and

Figure 11 shows a further stator for use in an induction motor in accordance with the invention.

Referring to the drawings, the present invention is based on the following relationship between certain yoke and tooth dimensions of the stator core :

When $T_o$ is the width of the tooth at the magnetic polar axis $T_1$ is the width of the first teeth from the magnetic polar axis, $T_2$ is the width of the second teeth from the polar axis, $T_3$ is the width of the third teeth from the polar axis, TE is the width of the teeth furthest from the polar axis.

$W_o$    is the yoke radial thickness between $T_o$ and $T_1$

$W_1$    is the yoke radial thickness betwen $T_1$ and $T_2$

$W_2$    is the yoke radial thickness between $T_2$ and $T_3$.

WE is the yoke radial thickness at the boundary of the magnetic pole, then the relationship between $T_o$, $T_1$, $T_2$, $T_3$......TE and $W_o$, $W_1$, $W_2$, $W_3$....WE is as follows :

$$W_o = T_o/2$$
$$W_1 = T_o/2 + T_2$$
$$W_3 = T_o/2 + T_1 + T_2 + T_3$$
$$WE = T_o/2 + T_1 + T_2 + T_2 + \dots\dots + TE$$

In this manner, an advantageous magnetic flux distribution is obtained.

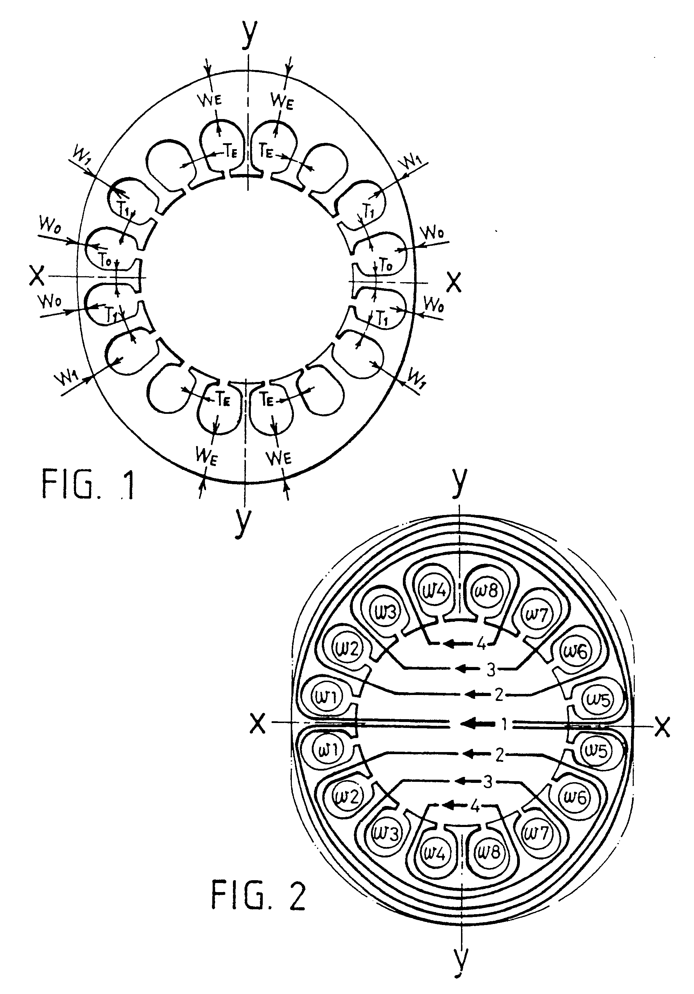

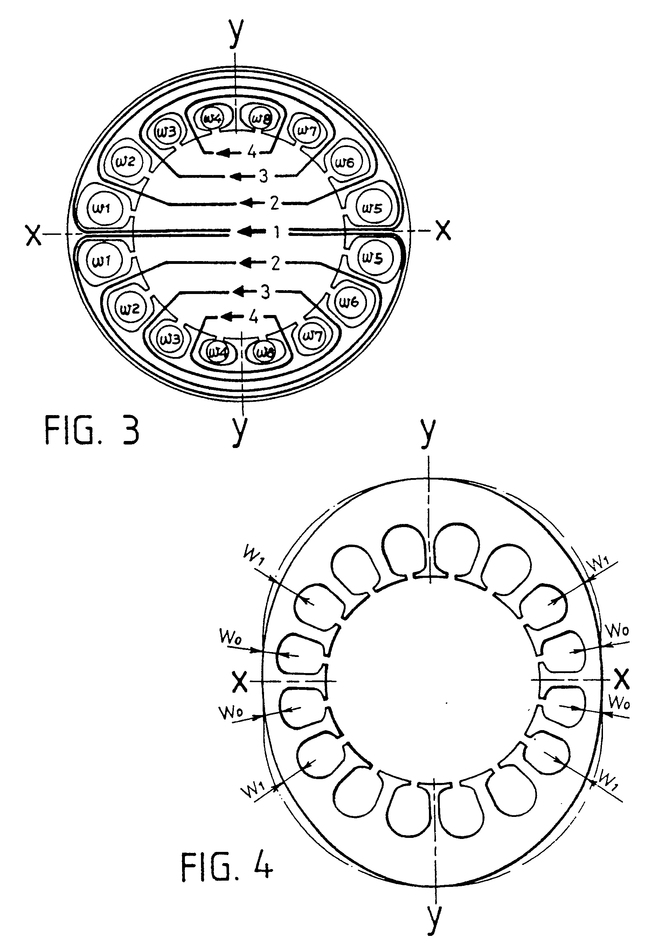

In the particular embodiment shown in Figure 1, four regions of greatest yoke radial thickness WE are disposed symmetrically about axis $Y - Y$ which is at right angles to the magnetic axis $X - X$ and which constitutes the boundary line between adjacent magnetic poles.

Fig. 2 shows a stator core having an elliptical outer periphery and a gradually expanding magnetic yoke. An alternative outer periphery is shown by the chain line.

Fig. 3 shows a stator core with a circular periphery and a gradually expanding magnetic yoke.

It will be noted that the longest magnetic flux of the running winding cuts the largest yoke thickness WE of the magnetic path of the core. Hence the running performance is very good.

However, the magnetic flux due to the starting winding (between the two largest different magnetic poles) must cut the yoke portion of radial thickness $W_o$. Fortunately, a single phase and split phase starting motor (non-permanent runs) can generate the appropriate flux.

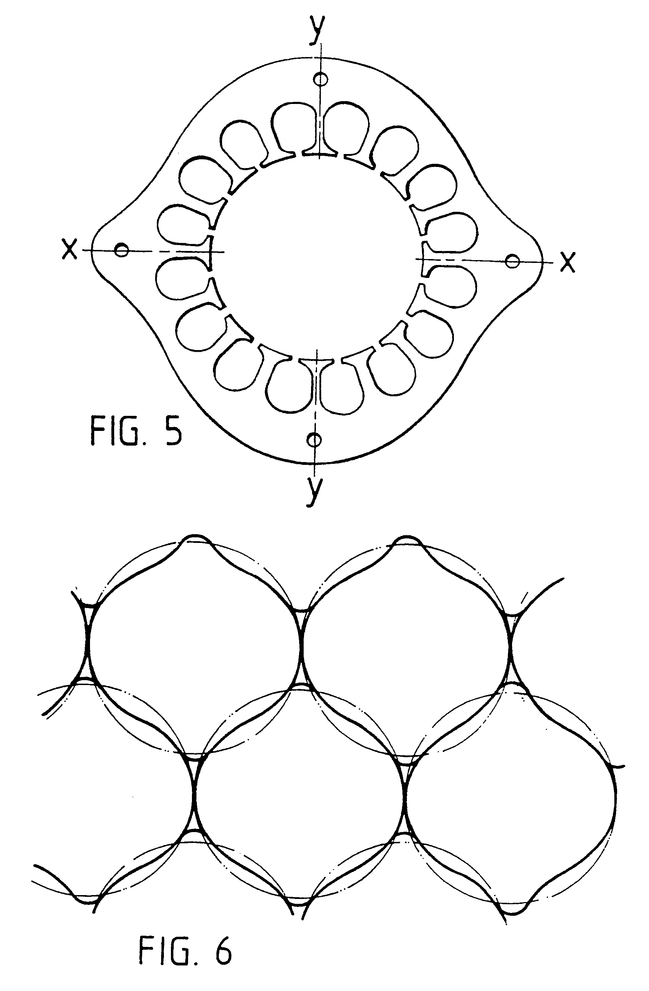

The required modifications can be made as shown in Fig. 4 by truncating the core at the ends of the polar axis so that the yoke radial thickness $W_o$, $W_1$ etc. increases progressively. Alternatively the periphery shown by the chain-dotted lines in Fig. 2 or 4 can be employed.

In a further variant shown in Figure 5, the stator has a region of increased radial thickness at the polar axis $X - X$ due to two diametrically opposed protuberanics in this region.

The pattern required to produce the required laminations is shown in Figure 6.

By comparing this pattern with the traditional pattern (shown by chain-dotted lines in Figure 6) it will be seen that less material is required, owing to the complementary profiles of the adjacent laminations in the pattern.

It should be noted that $T_o - T_E$ may be varied in accordance with the requirements of the waveform. The relationship between $T_o - T_E$ and $W_o - W_E$ still applies.

The slots of the stator may have different depths, shapes and areas according to the density of windings.

Based on the above considerations, the following embodiments arise :

(a) Similar slot shape and tooth form with elliptical or approximately elliptical stator core periphery. Such an embodiment is shown in Figure 2.

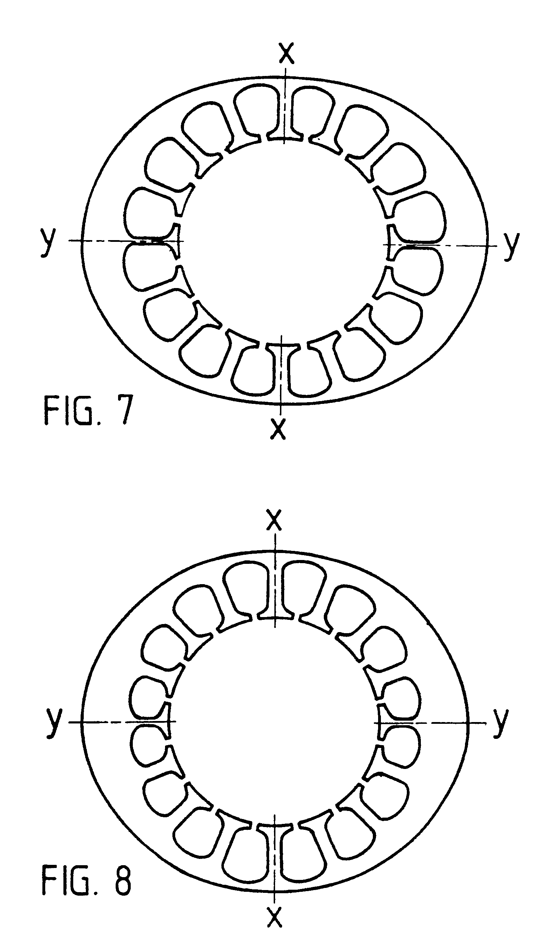

(b) Similar slots but different teeth form with elliptical or approximately elliptical stator core periphery. Such an embodiment is shown in Figure 7.

(c) Similar teeth shapes but different slot forms with elliptical or approximately elliptical stator core periphery.

In Fig. 8, the spaces between the teeth of the stator are the same, except that the two spaces between the teeth through the axis $Y - Y$ are smaller.

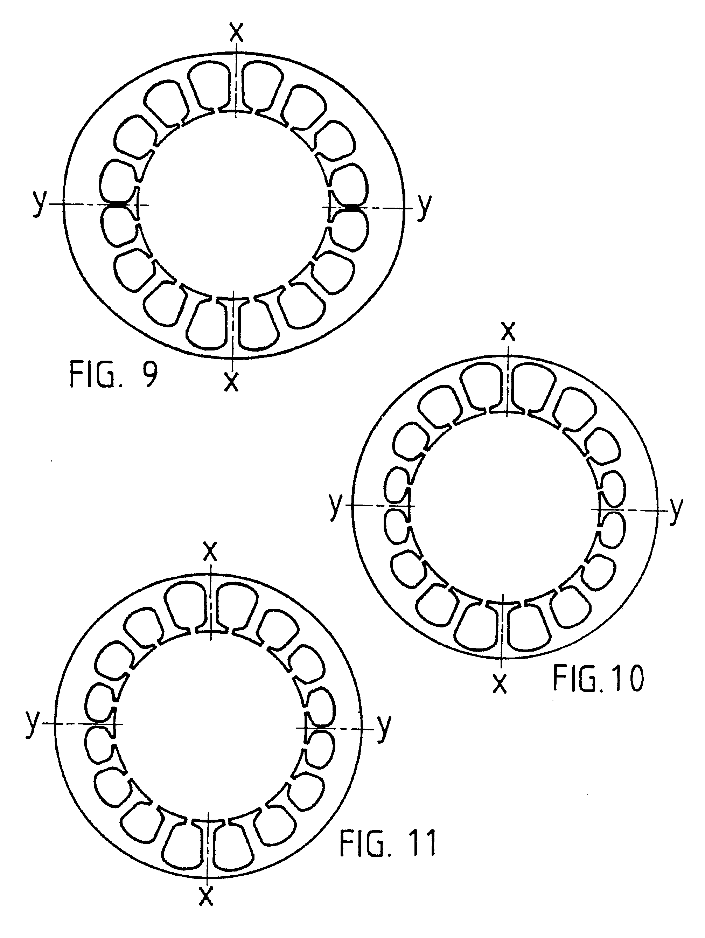

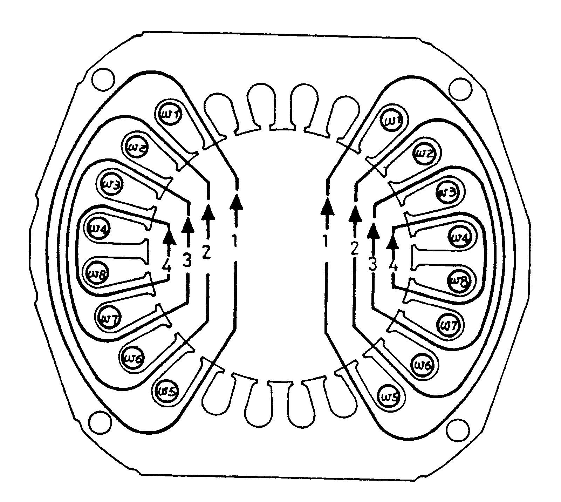

(d) Different groove shapes and different teeth forms with elliptical or approximately elliptical stator core periphery. Such an embodiment is shown in Figure 9.

In this embodiment, the two spaces between the teeth through the axis $X - X$ are wider than the others, and the spaces decrease progressively towards the axis $Y - Y$.

(e) The same teeth forms but different slot shapes, with bases of the slots having different depths and the periphery of the stator core being circular. Such an embodiment is shown in Figure 10. In Fig. 10, the spaces between the teeth of the stator are the same, except that the two spaces between the teeth through the axis $Y - Y$ are smaller.

(f) Different tooth shapes and slot forms with the bases of the slots being disposed approximately in an ellipse, the slots having different depths and the periphery of the stator core being circular. Such an embodiment is shown in Figure 11. In this embodiment, the two spaces between the teeth through the axis $X - X$ are wider than the others and the spaces decrease progressively towards the axis $Y - Y$.

(g) Any of the above embodiments (a) to (f) but with the regions neighbouring the two poles in the form of an apex.

It should be noted that the invention (which is applicable for example to a split phase induction motor) provides a yoke radial thickness which varies (on each side of the polar axis) in accordance with the magnetic flux due to each tooth, which in turn varies in accordance with the tooth width. In this manner, the weight and dimensions of the motor can be reduced.

## Claims

1. An alternating current single phase two-pole induction motor in which stator laminations are so shaped that the radial thickness (W) of the yoke at the root of each associated stator winding slot increases away from a polar axis $(X - X)$ of the stator, characterised in that said radial thickness is substantially given by :

$$W_n = 1/2\, T_o + T_1 + T_2 + \ldots\ldots T_n$$

for teeth up to 90° from the polar axis $(X - X)$, where $W_n$ is the yoke radial thickness at the nth tooth from the polar axis, $T_o$ is the tooth thickness at the polar axis and $T_{11}\, T_2\ldots\ldots T_n$ are the widths of the first, second......nth teeth from the polar axis at either side of the polar axis.

2. A motor according to claim 1 in which the outer periphery of the laminations is elongate in a direction $(Y - Y)$ normal to the polar axis $(X - X)$.

3. A motor according to claim 2 in which the laminations have an elliptical outer periphery.

4. A motor according to claim 1 in which the depths of the winding slots increase away from the polar axis.

5. A motor according to claim 4 in which the stator laminations have a circular outer periphery.

6. A motor according to any preceding claim with the modifications that the laminations have a portion of increased radial thickness in the region of the polar axis $(X - X)$.

## Patentansprüche

1. Einphasiger zweipoliger Wechselstrom-Induktionsmotor, dessen Statorlamellenbleche so geformt sind, daß die radiale Dicke W des Jochs am Grund jeder zugeordneten Statornut von einer Polachse (X – X) des Stators weg zunimmt, **dadurch gekennzeichnet**, daß die radiale Dicke im wesentlichen gegeben ist durch

$$W_n = 1/2\, T_o + T_1 + T_2 + \ldots\ldots T_n$$

für Zähne bis zu 90° von der Polachse (X – X), wobei $W_n$ die radiale Jochdicke an dem n-ten Zahn von der Polachse aus, $T_o$ die Zahndicke an der Polachse und $T_1$, $T_2$....$T_n$ die Breite des ersten, zweiten...n-ten Zahns von der Polachse auf beiden Seiten der polachse ist.

2. Motor nach Anspruch 1, bei welchem der Außenumfang der Lamellenbleche in einer Richtung (Y – Y) normal zur Polachse (X – X) langgestreckt ist.

3. Motor nach Anspruch 2, bei welchem die Lamellenbleche einen elliptischen Außenumfang haben.

4. Motor nach Anspruch 1, bei welchem die Nuttiefe der Windungsschlitze von der Polachse weg zunimmt.

5. Motor nach Anspruch 4, bei welchem die Statorlamellenbleche einen kreisförmigen Außenumfang haben.

6. Motor nach einem vorhergehenden Anspruch, mit den Modifizierungen, daß die Lamellenbleche im Bereich der Polachse (X – X) einen abschnitt mit erhöhter radialer Dicke haben.

**Revendications**

1. Moteur à induction bi-polaire monophasé à courant alternatif dans lequel les lames du noyau feuilleté ont une forme telle que l'épaisseur radiale (W) de la culasse à la racine de chacune des encoches de bobinage du stator augmente lorsqu'on s'éloigne à partir d'un axe polaire (X – X) du stateur, caractérisé en ce que ladite épaisseur radiale est sensiblement donnée par la formule :

$$W_n = 1/2\, T_o + T_1 + T_2 + .......T_n$$

à partir des dents jusqu'à 90° à partir de l'axe polaire (X – X), formule dans laquelle $W_n$ est l'épaisseur radiale de la culasse à la nième dent à partir de l'axe polaire, $T_o$ est l'épaisseur de dent à l'axe polaire et $T_1$, $T_2$... $T_n$ sont les largeurs de la première, de la seconde... et de la nième dent à partir de l'axe polaire d'un côté quelconque de l'axe polaire.

2. Moteur selon la revendication 1 dans lequel la périphérie externe des lames est allongée dans le sens (Y – Y) perpendiculaire à l'axe polaire (X – X).

3. Moteur selon la revendication 2 dans lequel les lames ont une périphérie externe elliptique.

4. Moteur selon la revendication 1 dans lequel les profondeurs des encoches de bobinage augmentent lorsqu'on s'éloigne de l'axe polaire.

5. Moteur selon la revendication 4 dans lequel les lames du stator ont une périphérie externe circulaire.

6. Moteur selon l'une quelconque des revendications précédentes comportant les modifications qui consistent dans le fait les lames comportent une partie d'épaisseur radiale accrue dont la région de l'axe polaire (X – X).

FIG. 1

FIG. 2

FIG. 3

FIG. 4

6

FIG. 5

FIG. 6

FIG. 7

FIG. 8

FIG. 9

FIG. 10

FIG. 11